# EUROPEAN PATENT APPLICATION

(11) **EP 1 116 896 A2**
(43) Date of publication of application: **18.07.2001**
(21) Application number: 01100669.9
(22) Date of filing: 11.01.2001
(51) Int. Cl.: F16D 51/50

(54) **Drum brake device**

(30) Priority: 11.01.2000 JP 2000002992
(71) Applicant: NISSHINBO INDUSTRIES INC., Chuo-ku, Tokyo (JP)
(72) Inventor: Hasegawa, Junichi, c/o Nisshinbo Industries Inc., Nagoya-shi, Aichi-ken (JP)
(74) Representative: Henkel, Feiler, Hänzel

(57) **Abstract**

An object of this invention is to improve a drum brake device with respect to the brake efficiency, to prevent wear down and deformation of the pivot section between a brake shoe (40) and a pivot lever (50), and to improve the operator's comfort level during braking. For those purposes, this invention provides a drum brake device, wherein a supporting structure (60) for supporting the adjacent ends of the pivot levers (50) is such that the pivot levers may easily follow the brake shoe movement in the drum's rotational direction.

## Description

### BACKGROUND OF THE INVENTION

### 1. Field of the Invention

This invention relates to a drum brake device and particularly to a drum brake device having pivot levers that follow a brake shoe movement in the brake drum's rotational direction.

### 2. Description of the Related Art

Japanese Laid Open Patent Application No. 10-47296 discloses a drum brake device attaining a stable braking force just like a dual two leading (hereinafter D2L) type drum brake device despite use of only one service brake actuator (i.e., hydraulic cylinder).

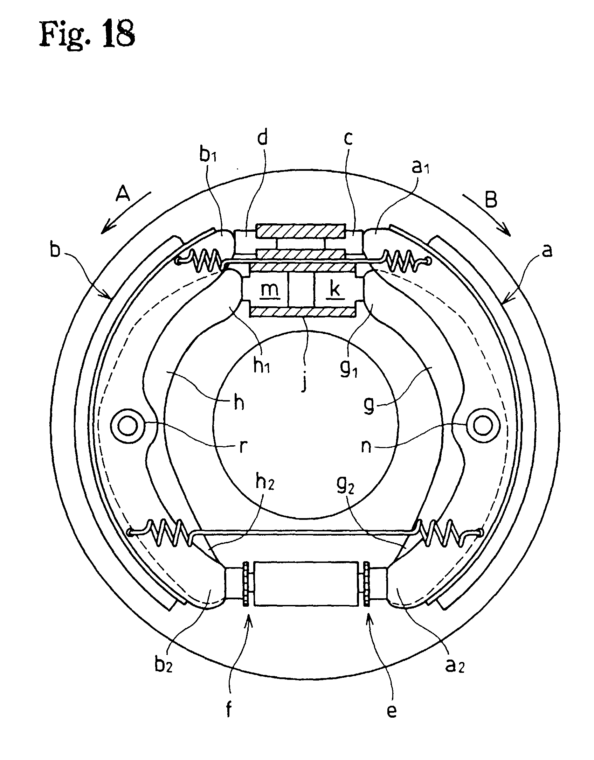

A prior art drum brake device is explained with reference to Figure 18. The drum brake device includes the following: two anchors c, d that are positioned between facing adjacent ends a₁, b₁ of a pair of brake shoes a, b; shoe clearance adjustment devices e, f also functioning as anchors are similarly positioned between the other adjacent ends a₂, b₂ of the brake shoes a, b; pivot levers g, h are rotatably pivoted under central regions of the brake shoes a, b respectively; one pair of adjacent ends g₁, h₁ of the pivot levers g, h are functionally engaged with pistons k, m of a service brake actuator j; meanwhile, the other pair of adjacent ends g₂, h₂ are abutted against and engaged with the shoe clearance adjustment devices e, f; and an operation force of the service brake actuator transmitted to the pivot levers g, h is further transmitted to the brake shoes a, b via pivot sections n, r of the pivot lever g, h.

If the service brake is activated while a brake drum, not shown in Figure 18, is rotating in the direction of arrow A or B, the brake shoes a, b move together with the brake drum. Accordingly, either one of the facing adjacent ends a₁, b₂ or a₂, b₁ of the brake shoes a, b are borne by the anchors c, f or e, d, which generate a braking force. Since the pivot sections n, r move together with the brake shoes a, b along the rotational direction A or B of the brake drum, the pivot levers g, h rotate relative to the brake shoes a, b with the pivot sections n, r and the adjacent ends g₁, h₁ and g₂, h₂ of the pivot levers g, h slidably move on the pistons k, m and the anchors, e, f.

The above-described prior art suffers from following drawbacks and deficiencies.

Since the adjacent ends g₁, h₁ and g₂, h₂ of the pivot levers g, h slidably move on the pistons k, m and the anchors e, f during the brake operation, the prior art produces problems by creating sliding resistance between the ends of the pivot levers g, h and the pistons k, m or the anchors e, f which can cause an unstable braking force. Such unstable breaking force causes the premature wear down of the abutment surfaces. The wear down of the abutment surfaces is further accelerated when the anchors e, f which bear the adjacent ends g₂, h₂ of the pivot levers g, h are fixed as such conditions also increase the sliding resistance.

During brake operation, the pivot lever g, h movement opposes that of the brake shoes a, b; this creates a condition wherein the pivot sections n, r of the brake shoes a, b may be overloaded. Such an overload causes wearing down and deformation of the pivot levers g, h, ultimately reducing durability.

If the shoe clearance adjustment devices e, f bear both adjacent ends a₂, b₂ of the brake shoes a, b and the adjacent ends g₂, h₂ of the pivot levers g, h, then the operation force of the service brake actuator j acts on the shoe clearance adjustment devices e, f via the pivot levers g, h. For drum brakes wherein the shoe clearance adjustment devices e, f adjust automatically, an operation force applied by the service brake actuator can create an unstable condition.

Depending upon the rotational direction of the brake drum, the necessary activation force required to engage the service brake actuator j either increases or decreases, creating driver discomfort manifested in the form of changing conditions.

### SUMMARY AND OBJECT OF THE INVENTION

It is an object of this invention to provide a drum brake device which is improved with respect to its brake efficiency, the prevention of wearing and deformation of the pivot section of the brake shoes and the pivot levers, and with respect to the driver's feeling in the braking. To achieve this object this invention provides the following devices.

This invention provides a drum brake device as defined in claim 1. Preferred embodiments of the invention are defined in the sub-claims.

This invention particularly is a drum brake device comprising: a pair of facing brake shoes; a first anchor supporting adjacent ends of the pair of facing brake shoes; a second anchor supporting the other adjacent ends of the pair of facing brake shoes; a pair of pivot levers, wherein one pivot lever is pivotably supported on the central region of one brake shoe and the other pivot lever is pivotably supported on the central region of the other brake shoe; a brake actuator functionally engaged with adjacent ends of the facing pivot levers; the other adjacent ends of the facing pivot levers supported by a supporting structure, wherein the supporting structure is designed to follow a movement of the brake shoes in the rotational direction of a brake drum; and an operation force of the brake actuator acting on adjacent ends of the pivot levers transmitted to the brake shoes via pivot points on both pivot levers.

When braking, both pivot levers of this invention can easily follow the brake shoe movement in the rotational direction of the brake drum because of the supporting device's position between the other adjacent ends of the pivot levers. Accordingly, brake efficiency and braking stability may be improved by eliminating conventional sliding resistance found in the prior art.

Since the supporting structure, i.e. a supporting device supporting the other adjacent ends of both pivot levers may swing and the engagement section of the two may move smoothly, this reduces the overload on the pivot section of the brake shoe and the pivot lever and prevents wear and deformation of the pivot section.

During the automatic shoe clearance adjustment operation, no thrust force acts on the thread engaging mechanism, thereby stabilizing the operation of the automatic shoe clearance adjustment device which requires micro-adjustment.

The upper and lower adjacent ends of the pivot lever can easily follow the movement of the brake shoe in the drum's rotational direction because of the supporting structure/device and the spacer engaging with the lower and upper adjacent ends of the pivot lever, respectively. This unique design prevents increases or decreases, depending upon the rotational direction of the brake drum, of the required actuator stroke. Such a design eliminates an uncertain feeling concerning the brake operation which an operator can develop with a conventional drum brake device.

### BRIEF DESCRIPTION OF THE DRAWINGS

The above and other objects and advantages of the present invention will become readily apparent by reference to the following detailed description when considered in conjunction with the accompanying drawings.
Figure 1 is a plan view of a first embodiment of the drum brake device in this invention;
Figure 2 is a cross-section view of Figure 1 taken along the line II-II;
Figure 3 is a cross-section view of Figure 1 taken along the line III-III;
Figure 4 is a cross-section view of Figure 1 taken along the line IV-IV;
Figure 5 is a view of a modification of the second anchor with an automatic shoe clearance adjustment device;
Figure 6 is a view of a modification of the brake shoe and the pivot lever;
Figure 7 is a view of a modification employing a spacer with spherical surfaces at both ends;
Figure 8 is a view of modification with another type of a spacer using a low friction material;
Figure 9 is a view of brake operation with regard to the right half of the brake;
Figure 10 is another view of brake operation with regard to the right half of the brake;
Figure 11 is a view of an important section in a second embodiment;
Figure 12 is a partial sectional view of Figure 11 taken along the line XII-XII;
Figure 13 is a view of a modification of the second embodiment in which top ends of the pivot lever are pivotally supported by a pin;
Figure 14 is a cross-section view of Figure 13 taken along the line XIV-XIV;
Figure 15 is a view of an important section of a third embodiment;
Figure 16 is a cross-section view of Figure 15 taken along the line XVI-XVI;
Figure 17 is a view of a vital part of a fourth embodiment; and
Figure 18 is a conventional drum brake device.

### DETAILED DESCRIPTION OF PREFERRED EMBODIMENTS

### Embodiment 1

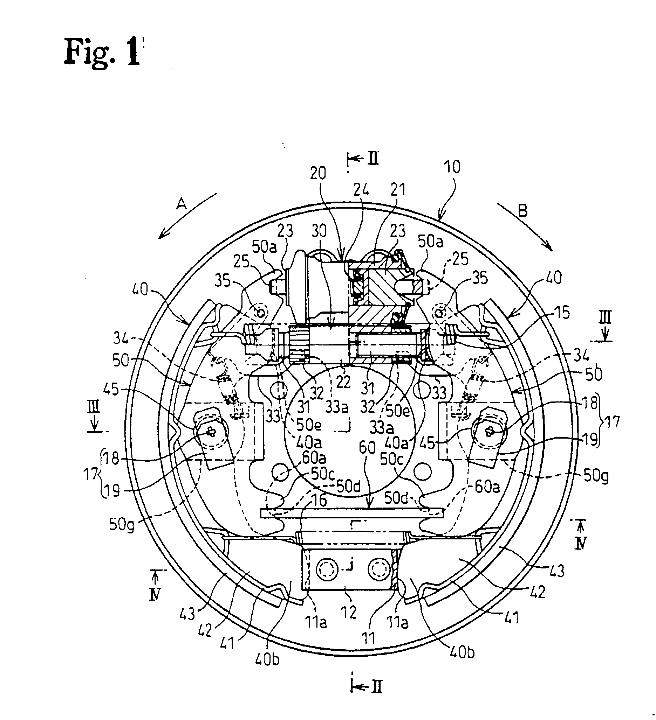

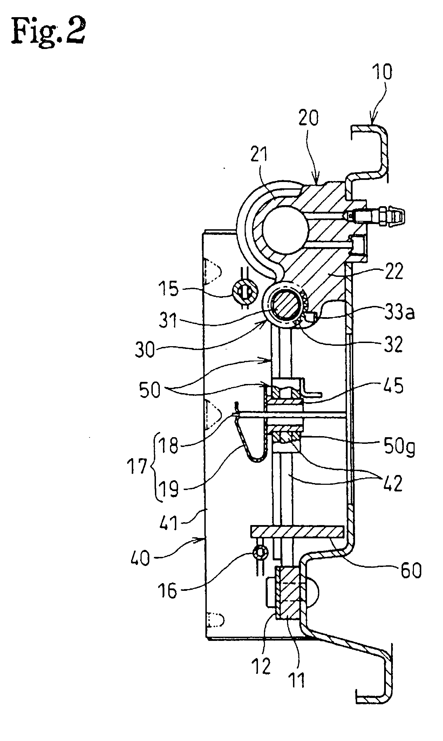

A first embodiment of a drum brake device in accordance with this invention is explained with reference to Figures 1-10. Since the structure of this drum brake device is such that the right half and the left half of the drum brake in Figures 1-10 are symmetrically structured, the following explanation illustrates only one half of the figures while the explanation of the other half is omitted by utilizing the same reference numbers for both halves of the device. The terms "right" or "left" and "upper" or "lower" are used for clarification when explaining applicable devices; however, the direction of the drum brake device set is not limited to that which is illustrated in the figures.

As shown in Figure 1, a hydraulic cylinder 20 functioning as a service brake actuator is mounted on a back plate 10 fixed on a non-rotatable part of a vehicle. A piston 23 is strokably housed inside a cylinder body 21 of the hydraulic cylinder 20.

Utilizing an anchor body 22 integrally formed with the cylinder body 21 of the hydraulic cylinder 20, a first anchor comprising a shoe clearance adjustment device 30, as is known to one skilled in the art, is positioned adjacent to the hydraulic cylinder 20 yet closer to a brake center. The brake shoe clearance adjustment device 30 serves to allow a manual adjustment of a clearance between the brake drum, not shown in Figure 1, and a lining 43 of brake shoes as will be discussed below. Components of the brake shoe clearance adjustment device 30 are such that an adjustment nut 32 is screwed on an adjustment bolt 31. An axle portion at the left side of the adjustment bolt 31 projecting out from the adjustment nut 32 slidably fits into a bore opening on the anchor body 22, and the left end surface of the adjustment nut 32 abuts against the opening end surface of the bore. The adjustment nut 32 may be rotated by using a tool, i.e., a screw driver inserted from outside of the brake in order to rotate the adjustment bolt 31 away from or towards the adjustment nut 32, thereby facilitating adjustment of the clearance between the brake drum and the lining 43.

At the lower portion of the back plate 10, a second anchor 11, such as a rectangular plate, is inserted and fixed between a retaining plate 12 and a protrusion of the back plate 10 by a retaining means, e.g., rivets, thereby forming grooves by the above-three components, i.e., the back plate 10, the second anchor 11, and the retaining plate 12.

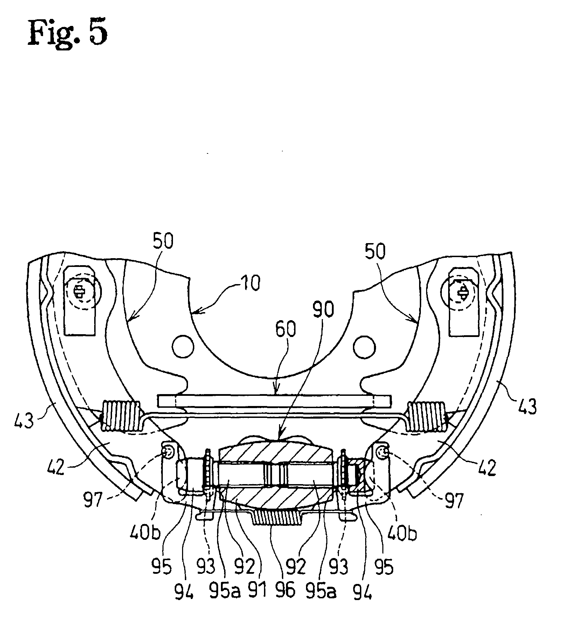

As shown in Figure 5, instead of using the brake shoe clearance adjustment device 30 as a component of the first anchor as is shown in Figure 1, the shoe clearance adjustment device may be provided as a component of a second anchor 90. A structure of the brake shoe clearance adjustment device 30 in this modification is such that a threaded stem at the left side of an adjustment bolt 92 is rotated to fit into the female threaded portion of an anchor body 91, a star wheel 93 is integrally formed on the intermediate portion of the adjustment bolt 92, and a stem at the right side of the adjustment bolt 92 is rotatably fit onto a sleeve 94. Manual operation of the brake shoe clearance adjustment device in this embodiment can be performed by rotating the star wheel 93 to turn the adjustment bolt 92 away from or towards the anchor body 91

The manual brake shoe clearance adjustment device's threaded engaging structure is interchangeable between the first anchor and the second anchor 90.

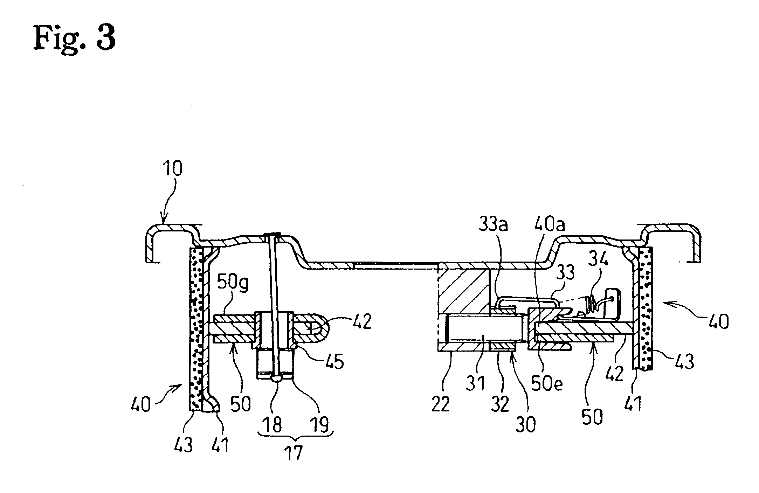

Referring to Figures 1 and 3, a brake shoe 40 is comprised of a shoe rim 41 and a shoe web 42 fixed thereunder to form a cross section with a T-shape and a lining 43 superposed on the circumferential surface of the shoe rim 41. The upper end 40a of the brake shoe 40 abuts on the bottom of a notched groove on the adjustment bolt 31 of the shoe clearance adjustment device 30. The upper end 40a and an intermediate portion 50e of a pivot lever 50 engage with the notched groove on the adjustment bolt 31, thereby restricting rotation of the adjustment bolt 31, while the lower end 40b of the brake shoe 40 abuts with a side end surface 11a of the second anchor 11 in Figure 1 or engages the bottom of a notched groove on the sleeve 94 of the second anchor 90 in Figure 5.

The pivot lever 50 is arc-shaped and has a turn-up or folded section 50g within its intermediate portion as shown in Figures 1 and 3. This turn-up section 50g secures the intermediate portion of the shoe web 42 by sandwiching the same therebetween. A flanged sleeve 45 is inserted through holes in each turn-up plate superposed on one another and a through hole in the shoe web 42; therefore, the pivot lever 50 and the brake shoe 40 pivot relative to each other with the flanged sleeve 45 as the fulcrum.

The pivot lever 50 comprises the turn-up portion 50g and a base portion. Although the turn-up portion 50g is not a prerequisite for this invention, when the pivot lever 50 transmits the pressing force to the shoe web 42 via the flanged sleeve 45, the folded superposed portions, i.e., the turn-up portions 50g and the base portion, transmit an operation force on both sides of the sleeve 45 with the flange, which limits the pinching force and increases the durability of the pivot lever 50.

The structure of the pivot section between the pivot lever 50 and the brake shoe 40 is such that the pivot lever 50 and the shoe web 42 of the brake shoe 40 are elastically mounted on the back plate 10 by a shoe holding pin 18 of a shoe hold mechanism 17 mounted at one end thereof on the back plate 10 such that it swings freely and penetrates through the sleeve 45 and a plate spring 19 compressed on the flange of the sleeve 45 by snapping the other end of the shoe holding pin 18 thereon.

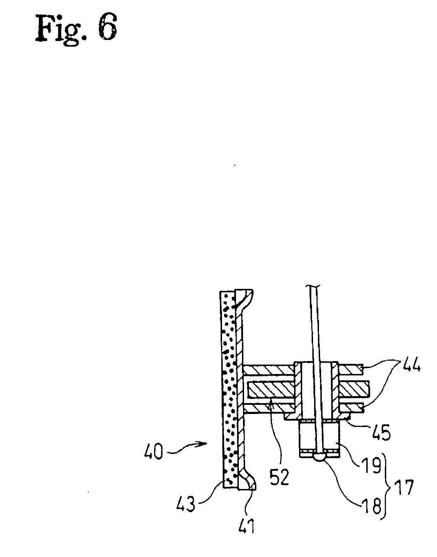

With respect to a twin-web type brake shoe 40 as shown in Figure 6, a planed pivot lever 52 may be inserted between a pair of parallel shoe webs 44 and 44.

Referring to Figure 1, the upper end 50a of the pivot lever 50 is functionally engaged with the piston 23 via a spacer 25 which may be free floating; one end surface of the piston 23 has a concave spherical recess receiving the spacer 25. For example, one end of the pin-like spacer 25 is a projecting spherical surface to be engaged with the concave spherical surface of the piston 23, whereas the other end of the spacer 25 has a groove to be engaged with the concave spherical surface of the upper end 50a of the pivot lever 50. In this example, the projecting spherical surface of the spacer 25 is capable of rolling on the concave spherical surface of the piston 23, thus allowing the smooth movement of the pivot lever 50 when the brake shoe 40 rotates in the drum rotational direction.

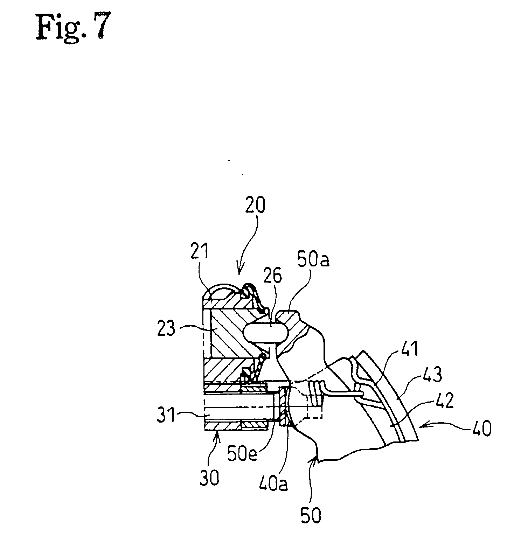

If the upper end 50a of the pivot lever 50 is laterally expanded, the movement of the pivot lever 50 becomes smoother by engaging a spacer 26 having spherical surfaces on both opposite ends with concave spherical recesses on the piston 23 and on the upper end 50a surface of the pivot lever 50 as shown in Figure 7. It may be sufficient to make a spherical engagement only between the upper end 50a of the pivot lever 50 and the spacer 25 or 26.

Though not shown in the figures, the end surface of the piston and the upper end surface of the pivot lever may have projecting spherical surfaces, while both end surfaces of the spacer 25, 26 are then provided with concave spherical surfaces, thereby realizing a spherical engagement. Further, the spacer 26 may be a plate, both ends of which are processed to be in arc-surfaces engaged with the piston 23 and the pivot lever 50 as shown in Figure 7.

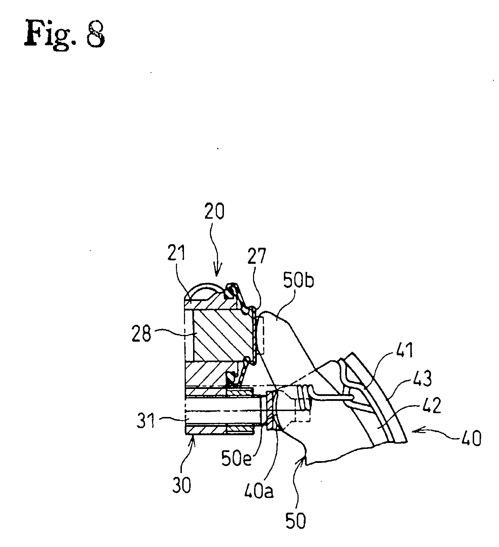

As shown in Figure 8, a spacer 27 may be a thin plate made of a material having a low frictional coefficient, which may be placed on the end surface of the piston 28 and engaged with the upper end 50b of the pivot lever 50. At least, this invention is to configure the device so as to realize an easy relative movement of the engagement section of the upper end 50a or 50b of the pivot lever 50 and the piston 23 or 28 when the brake shoe 40 moves in the drum's rotational direction.

The above-described spacers 25, 26 and 27 are not indispensable aspects of this invention.

The lower end 50c of the pivot lever 50 is to be supported by a supporting device. The supporting device is designed so that the pivot lever 50 can easily follow the brake shoe 40 as it moves within the drum. For example, the lower ends 50c, 50c of both pivot levers 50, 50 are designed to support each other. In this case, both supporting forces acting on the lower ends 50c, 50c are equalized by profiling the lower ends 50c, 50c and the supporting device laterally symmetrical.

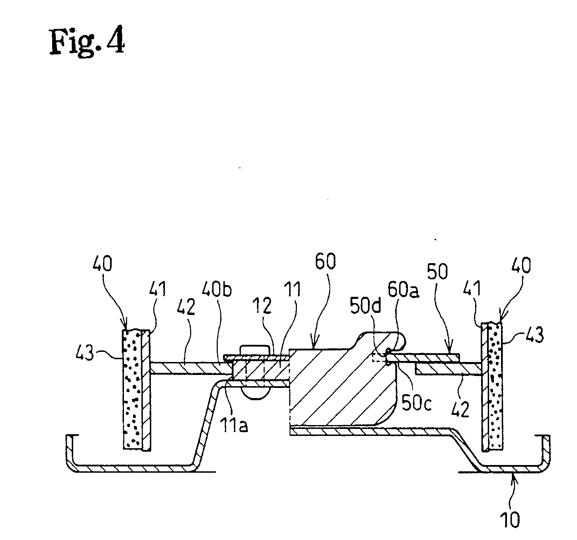

An example of the supporting device is shown in Figures 1 and 4 wherein a strut 60 is positioned and extended between the lower ends 50c and 50c of both pivot levers 50, 50. The lower ends 50c, 50c of the pivot levers 50, 50, have notched grooves 50d,50d, and each end of the strut 60 also has a notched groove 60a. The strut 60 fits with the pivot levers 50, 50, making cross-engagements between the notched groove 50d, 50d of the pivot levers 50, 50 and the notched grooves 60a, 60a of the strut 60.

Each notched groove 50d, 60a is dimensioned and profiled so that the pivot lever 50 can easily follow the movement of the brake shoe 40 in the drum's rotational direction. That is, when a spring force of first and second brake shoe return springs 15, 16 causes the upper end 40a of the brake shoe 40 to abut against the adjustment bolt 31 of the shoe clearance adjustment device 30 functioning as the first anchor and the lower end 40b to abut against the second anchor 11, and a spring force of a compression spring 24 housed in the hydraulic cylinder 20 causes the lower end 50c of the pivot lever 50 to abut against the strut 60, a slight gap is provided between an intermediate portion 50e near the upper end 50a of the pivot lever 50 and the bottom of the notched groove of the adjustment bolt 31 of the shoe clearance adjustment device 30.

The first brake shoe return spring 15 is extended between upper adjacent ends of both brake shoes 40, 40 while the second brake shoe return spring 16 is extended between lower adjacent ends thereof. In a mechanism to automatically adjust the brake shoe clearance by directly sensing the amount of movement with respect to the lower end 40b of the brake shoe 40 as shown in Figure 5, a momentum acting on the brake shoe 40 due to the spring force of the first brake shoe return spring 15 and the second brake shoe return spring 16 is designed such that the momentum on the brake shoe 40 with respect to the distance between the lower end 40b and a pivot point of a pivot section with the pivot lever 50 is smaller than the momentum on the brake shoe 40 with respect to the distance between the upper end 40a and the pivot point.

Figures 1 through 3 are referenced to explain an automatic shoe clearance adjustment device, which is a combination of the above-described brake shoe clearance adjustment device 30 and an adjustment lever 33, an adjustment spring 34, and a pin 35.

The right side adjustment lever 33 in Figure 1 has a reversed L-shaped, wherein the upper end thereof is rotatably supported on the pivot lever 50 with the pin 35 as the pivot or fulcrum; an intermediate portion of the adjustment lever abuts against a stepped surface of the adjustment bolt 31 and a claw portion 33a located at a tip end of the adjustment lever 33 engages with the peripheral teeth of the adjustment nut 32. The adjustment spring 34 extends between the adjustment lever 33 and the pivot lever 50 so as to drive the adjustment lever 33 in the clockwise direction with the pin 35 as the pivot as shown in Figure 1.

The modified automatic shoe clearance adjustment device is explained with reference to Figure 5, which is a combination of a threaded engaging mechanism comprising the second anchor 90, an adjustment lever 95, an adjustment spring 96, and a pin 97.

The adjustment lever 95 in this example at the right side in Figure 5 also has a reversed L-shaped, the upper end of which is rotatably supported on the shoe web 42 with the pin 97 as the pivot or fulcrum, an intermediate portion thereof abuts against the bottom of a groove of the sleeve 94, and a claw portion 95a located at a tip of the adjustment lever 95 engages with the peripheral teeth of a star wheel 93 integrally formed on the adjustment bolt 92. The adjustment spring 96 extends between the adjustment levers 95 and drives the right side adjustment lever 95 in clockwise direction with respect to the right side fulcrum pin 97 and the left side adjustment lever 95 in the counter-clockwise direction with respect to the left side fulcrum pin 97.

The brake operation of the drum brake device of this invention is explained with reference to Figures 1-4, 9 and 10, and the brake operation explained hereunder is applicable to other modifications of this invention, the explanation of which is omitted.

If the hydraulic cylinder 20 is pressurized, the pistons 23, 23 force the upper ends 50a, 50a of the pivot levers 50, 50 outward via the spacers 25, 25, and the pivot levers 50, 50 pivot with the supporting points respectively between the lower ends 50c, 50c thereof and the strut 60. The rotating force of the pivot levers 50, 50 is transmitted to the brake shoes 40, 40 via the flanged sleeves 45, 45 at the pivot sections of the pivot levers 50, 50, and the linings 43, 43 of the brake shoes 40, 40 are frictionally engaged with a brake drum (not shown in the figures).

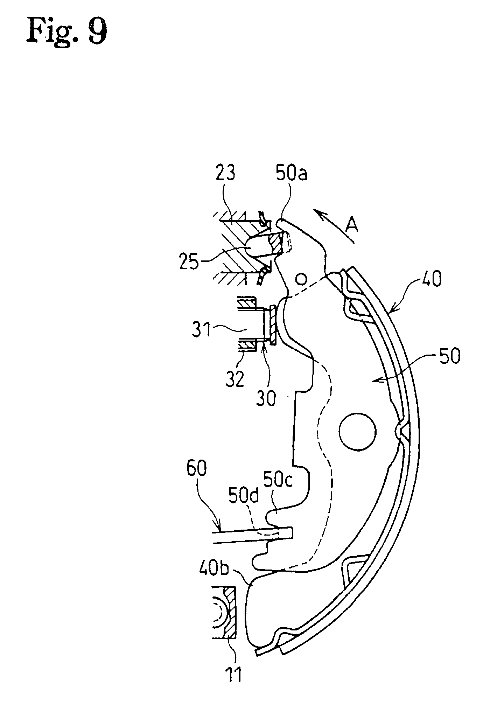

In Figure 1, if the brake drum is rotating counterclockwise, i.e., in the direction of arrow A, the lower end 40b of the brake shoe 40 at the left side of Figure 1 is supported by the second anchor 11, thereby generating self-servo effects and functioning as a leading brake shoe. The upper end 40a of the brake shoe 40 on the right side of Figure 1 is supported by the brake shoe clearance adjustment device 30 functioning as the first anchor as illustrated in Figure 9, thereby generating self-servo effects and functioning as a leading brake shoe, too. The pair of right and left brake shoes 40, 40 thus provide a braking function of a two-leading (2L) type.

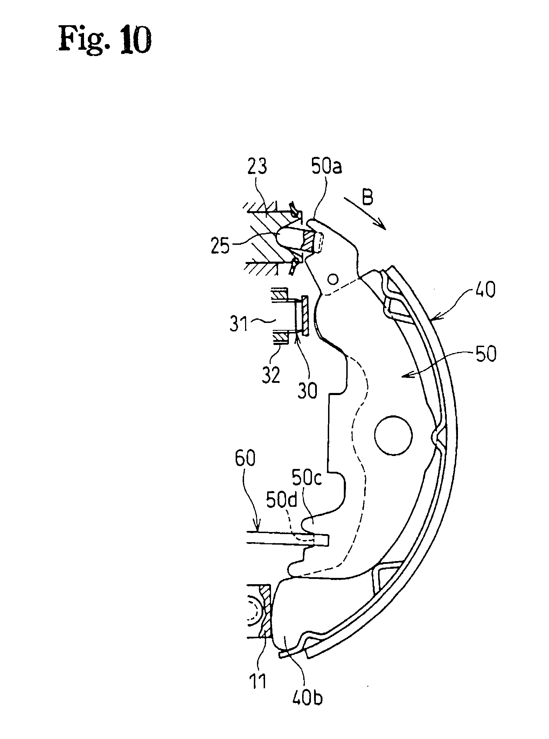

If the brake drum is rotating clockwise, i.e., in the direction of arrow B, the lower end 40b of the brake shoe 40 on the right side of Figure 10 functions as a leading brake shoe with self-servo effects as being borne by the second anchor 11 while the upper end 40a of the brake shoe 40 on the left side functions as a leading brake shoe with self servo-effects as being borne by the brake shoe clearance adjustment device 30, and the pair of right and left brake shoes 40, 40 provide the two-leading (2L) type braking function as described above.

Although there exists only one hydraulic cylinder 20 as a service brake actuator, both brake shoes 40, 40 function as leading brake shoes with self-servo effects, thereby providing a stable braking force as a dual-two leading (D2L) type drum brake device.

As is evident from Figures 9 and 10 showing the state of the brake shoe 40 on the right side, when the brake shoe 40 is dragged in the rotational direction of the brake drum, the pivot section of the pivot lever 50 is displaced. The upper end 50a and the lower end 50c of the pivot lever 50 also are displaced, the displacement of which is absorbed by tilting both the spacer 25 and the strut 60.

Accordingly, this invention provides a smooth movement of the pivot lever 50 relative to the brake shoe 40 without involving the conventional sliding movement on a surface of the pivot lever 50, without producing an overload on the pivot section of the pivot lever 50, and without projecting or pushing back the piston 23.

An embodiment according to Figures 1-3 is described in the following section. As the hydraulic cylinder 20 is pressurized to move the upper end 50a of the pivot lever 50 outward on the right side, the pin 35 simultaneously moves to the right. The adjustment lever 33 rotates clockwise in Figure 1 abutting against the adjustment bolt 31 because of the driving force generated by the adjustment spring 34. Once the lining 43 is worn out and the amount of rotation of the claw portion 33a located at the tip end of the adjustment lever 33 exceeds one tooth pitch of the peripheral teeth of the adjustment nut 32, the claw portion 33 rotates the peripheral teeth of the adjustment nut 32 thereby moving the adjustment bolt 31 away from the adjustment nut 32 for one tooth pitch, which automatically adjusts the clearance between the brake drum and the lining 43 of the brake shoe 40 and keeps the constant clearance between the two.

Another modification shown in Figure 5 is explained in the following section. As the hydraulic cylinder 20, not shown in Figure 5, is pressurized, the lower end 40b of the brake shoe 40 opens first because of the difference in the rotational momentum acting on the brake shoe 40; the brake shoe then engages with the brake drum, not shown in Figure 5. Then, the pin 97 moves simultaneously as the brake shoe 40 pivots, and the adjustment lever 95 rotates clockwise with the abutment point on the sleeve 94 of the right side in Figure 5 because of the driving force of the adjustment spring 96. Once the lining 43 is worn out and the amount of rotation of the claw portion 95a located at the tip end of the adjustment lever 95 exceeds one tooth pitch of the peripheral teeth of the star wheel 93, the claw portion 95a of the adjustment lever 95 rotates the star wheel 93 to screw and move the adjustment bolt 92 away from the anchor body 91 for one tooth pitch, which automatically adjusts the clearance between the brake drum and the lining 43 of the brake shoe 40 and maintains the constant clearance between the two.

As is described above, any of the automatic shoe clearance adjustment operation is conducted under conditions without a thrust force on the threaded engaging portion; therefore, the shoe clearance adjustment operation will be stable for a long period of time, increasing the reliability of the shoe clearance adjustment function.

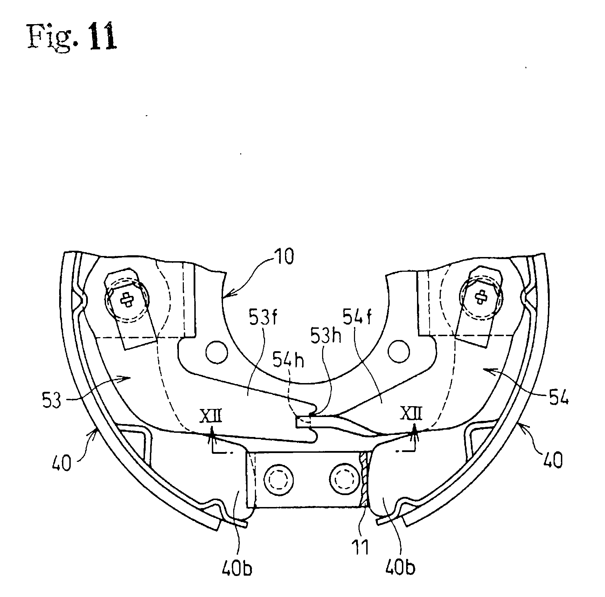

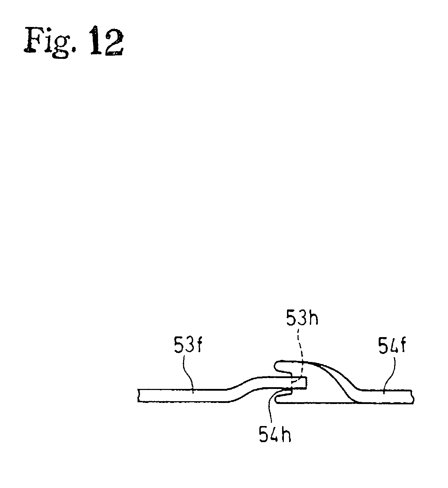

Instead of using the above described pivot levers 50, 50 and strut 60, for the structure of a second embodiment shown in Figures 11 and 12, one of lower ends 53f and 54f of the pivot levers 53, 54 may be twisted 90 degrees around a substantially longitudinal axis, and notched grooves 53h, 54h formed at the end of the pivot levers 53, 54 may be engaged directly with each other.

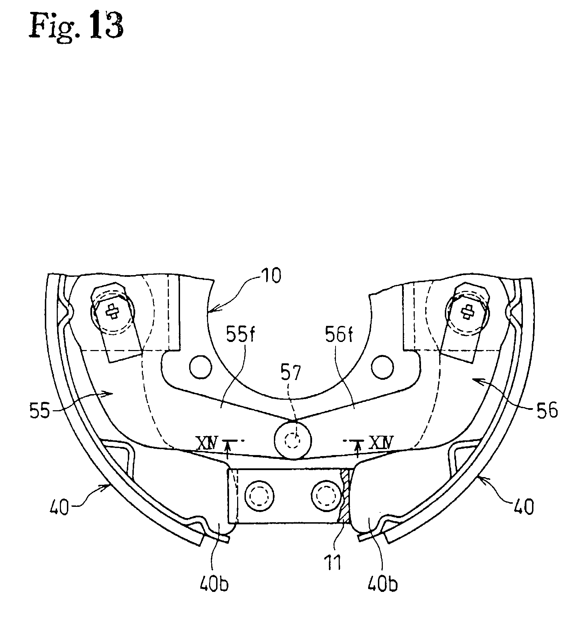

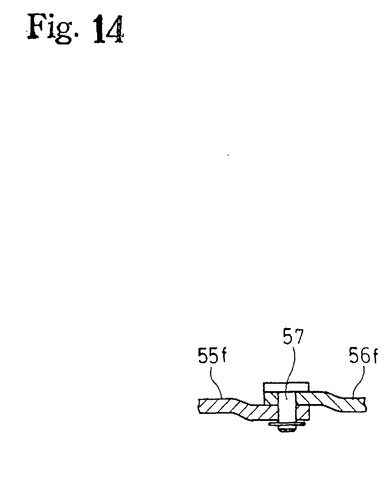

As a modified example of the structure of the second embodiment, lower ends 55f, 56f of the pivot lever 55, 56 may be superposed and pivotally connected by a pin 57 as shown in Figures 13 and 14. The supporting device of the second embodiment affords an advantage through easy movement of the pivot levers 55, 56 following the brake shoe movement in the drum rotational direction just like the supporting device in the first embodiment having the strut 60.

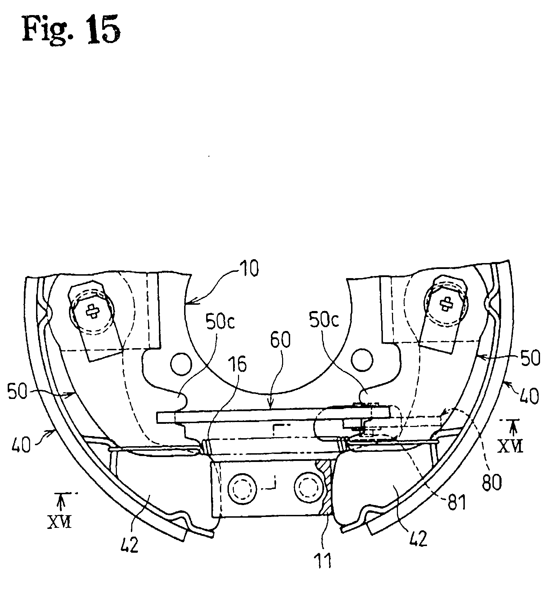

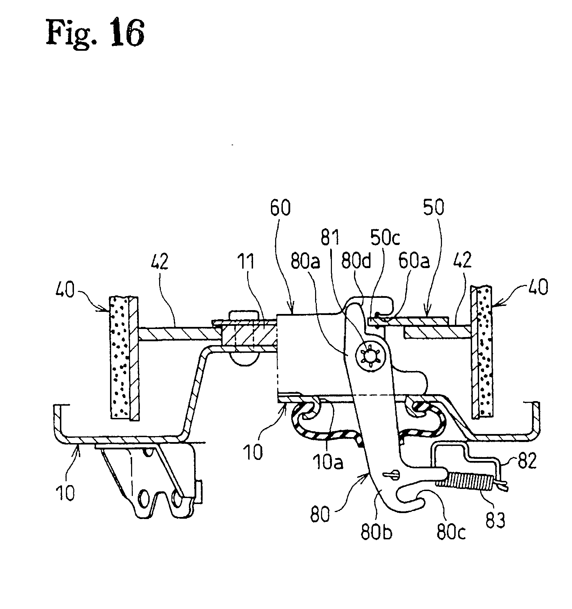

Figures 15 and 16 show an embodiment involving a mechanical type parking brake unit, wherein the mechanical type actuator comprises a brake lever 80 and a strut 60 that is utilized as a force transmitting member. The almost L-shaped brake lever 80 penetrates through an opening 10a formed on the back plate 10 and is positioned in the cross direction relative to the strut 60 in Figure 16. An intermediate portion 80a of the brake lever 80 is rotatably supported at the left end portion of the strut 60 by a pin 81; a brake cable, not shown in Figure 16, is connected to a groove 80c formed on an end portion 80b of the brake lever 80 located outside the drum brake, thereby constituting an input portion for a pulling force, while an end portion 80d located inside the drum brake is positioned at the other end of the brake lever 80 oppositely positioned relative to the inner end surface of the lower end 50c on the pivot lever 50 with a slight gap therebetween. A stopper 82 is fixed on the back plate 10 and to define an initial position of the brake lever 80. A lever return spring 83 extends between the brake lever 80 and the stopper 82.

In the third embodiment of the present invention, if a brake cable, not shown in Figures 15 or 16, is pulled to activate the outer end portion 80b of the brake lever 80 that is simultaneously being pulled toward left, the brake lever 80 rotates clockwise in Figure 16 with the pin 81 as the fulcrum. The inner end portion 80d pushes the lower end 50c of the right pivot lever 50 toward the right and abuts the upper end 50a against the first anchor 30, not shown in Figures 15, 16. Thereafter, a reaction force pushes the lower end 50c of the left pivot lever 50 toward the left via the pin 81 and the strut 60 abuts the upper end 50a of the left pivot lever 50 against the first anchor 30. If the brake cable is pulled further, the lower ends 50c, 50c of both pivot levers 50, 50 rotate to open with the point of abutment located on the first anchors 30, 30, while both brake shoes 40, 40 are rotated to open via the respective pivoting section.

As is evident from the above-description, the mechanical type parking brake unit of this embodiment may be used separately or in combination with other aspects of the invention described previously.

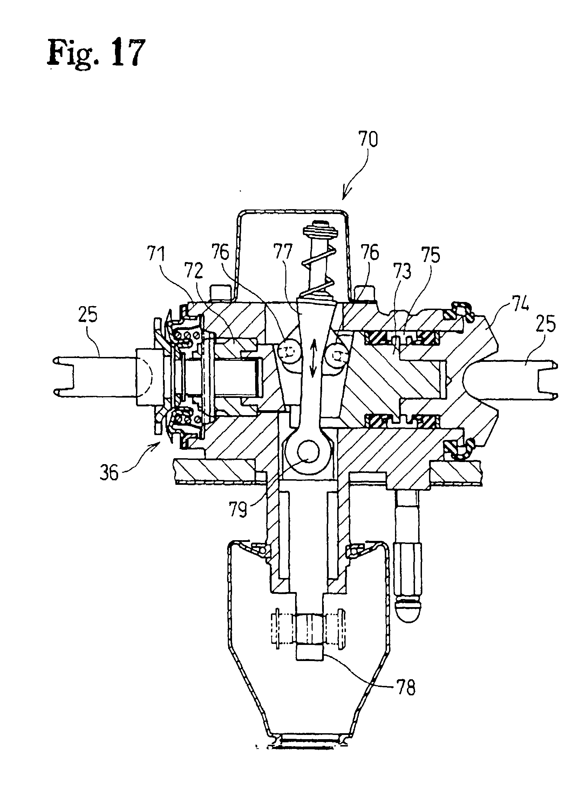

Figure 17 depicts an actuator 70 which combines hydraulic and mechanical type actuators. The installation of the actuator 70 may be accomplished similar to the positioning of the hydraulic cylinder in Figure 1.

Three pistons 72, 73, and 74 are slidably housed in series in a through bore of the hollow cylinder body 71. There exists a hydraulic chamber 75 partitioned between the middle piston 73 and the right piston 74, and a wedge 77 swingably inserted between the middle piston 73 and the left piston 72 via rollers 76, 76. The end of the wedge 77 extending toward the outside of the brake is rotatably supported on a rod 78 by a pin 79. The outer end portion of the rod 78 is connected to an air chamber, as is known to one skilled in the art, not shown in Figure 17. An automatic brake shoe clearance adjustment device 36 is provided at the front portion of the left piston 72, which is not essential for this invention, and an explanation of which is omitted here for that reason.

Brake operation of the above-described structure is explained also with reference to Figure 1. If the hydraulic chamber 75 is pressurized, the right piston 74 pushes the upper end 50a of the left pivot lever 50 via the spacer 25. The middle piston 73 pushes the upper end 50a of the left pivot lever 50 via both rollers 76 and 76, the wedge 77, the left piston 72, and the spacer 25. In this respect the same process of operation which is used in the previous embodiments is utilized in this embodiment, thus an explanation is omitted here.

If the rod 78 is pulled downward by an air chamber, not shown in Figure 17, the wedge 77 moves downward pushing both rollers 76, 76, thereby spreading them apart from each other. This pushing force generated by the wedge 77 makes the right roller 76 push the upper end 50a of the right pivot lever 50 via the middle piston 73, right piston 74, and the spacer 25 while the left roller 76 pushes the upper end 50a of the left pivot lever 50 via the left piston 72 and the spacer 25. The process of operation of this mechanical type actuator is also the same as the previously explained embodiments, thus an explanation is omitted.

This invention has the following advantages:

When braking, both pivot levers can easily follow the brake shoe's movement in the drum's rotational direction because of the supporting device which is positioned between adjacent ends of the pivot levers. Accordingly, conventional sliding resistance is eliminated, which improves the brake efficiency and the braking stability.

Since the supporting device for supporting the other adjacent ends of both pivot levers may swing or pivot and the engagement section of the two may move smoothly, this reduces overload on the pivot section of the brake shoe and the pivot lever, and prevents wear down and deformation of the pivot section.

During the automatic brake shoe clearance adjustment operation, no thrust force acts on the thread engaging mechanism. Therefore, operation of the delicate automatic brake shoe clearance adjustment device which requires micro-adjustment may be stabilized.

The upper and lower adjacent ends of the pivot lever can easily follow the movement of the brake shoe in the drum's rotational direction because of the supporting device and the spacer engaging with the lower and upper adjacent ends of the pivot lever, respectively. This unique design prevents increases or decreases, depending upon the rotational direction of the brake drum, of the required actuator stroke. Such a design eliminates uncertain feelings concerning brake operation an operator might develop with conventional devices.

## Claims

1. A drum brake device comprising:
a pair of brake shoes (40),
a first anchor (30) supporting first adjacent ends (40a) of said brake shoes (40),
a second anchor (11;90) supporting second adjacent ends (40b) of said brake shoes (40),
a pair of pivot levers (50;53,54;55,56), each one pivotably supported on a central region of a corresponding one of said brake shoes (40), and
a brake actuator (20;70) functionally engaging first adjacent ends (50a) of said pivot levers (50; 53, 54; 55, 56) and second adjacent ends (50c;53f,54f;55f,56f) of said pivot levers (50;53,54;55,56) being supported by a supporting structure (60;53h,54h;57) such that an operation force of said brake actuator (20;70) acting on said first adjacent ends (50a) of said pivot levers (50;53,54;55,56) is transmitted to said brake shoes (40) via pivot axes (45) of said pair of pivot levers (50;53,54;55,56), wherein
said supporting structure (60;53h,54h;57) is adapted to facilitate the movement of said pivot levers (50;53,54;55,56) in a rotational direction of a brake drum about said brake shoes (40).

2. The drum brake device as claimed in claim 1, wherein said supporting structure is formed by a supporting device (60;53h,54h;57) which is connected to the second adjacent ends (50c;53f,54f;55f,56f) of said pivot levers (50;53,54;55,56) to support each of said pair of pivot levers (50;53,54;55,56).

3. The drum brake device as claimed in claim 2, wherein said supporting device comprises a strut (60) extending between the second adjacent ends (50c) of said pivot levers (50) to define the supporting device.

4. The drum brake device as claimed in claim 1 or 2, wherein the second adjacent ends (53f,54f;55f,56f) of said pivot levers (53,54;55,56) are directly pivotally connected to each other to define the supporting structure.

5. The drum brake device as claimed in claim 4, wherein the second adjacent ends (53f,54f) of said pivot levers (53,54) are functionally engaged with each other.

6. The drum brake device as claimed in any one of claims 1 to 5, wherein said brake actuator is a hydraulic type actuator (20;70).

7. The drum brake device as claimed in claim 6, wherein
a spacer (25;26) inclinedly movable in the rotational direction of the brake drum is respectively positioned between a piston (23;74) of said brake actuator (20;70) and a corresponding one of the first ends (50a) of said pivot levers (50;53,54;55,56), and
a spherical engaging interface is formed between said spacer (25;26) and one of said first end (50a) of said pivot lever (50;53,54;55,56) and said piston (23;74).

8. The drum brake device as claimed in claim 6, wherein a spacer (27) having a low friction coefficient is positioned between a piston (28) of said brake actuator (20) and said first ends (50a) of said pivot levers (50;53,54;55,56).

9. The drum brake device as claimed in any one of claims 1 to 5, wherein said brake actuator is a mechanical type actuator (70).

10. The drum brake device as claimed in claim 3, wherein said strut (60) is a component of a mechanical type actuator (80) designed to be a force transmitting member.

11. The drum brake device as claimed in any one of claims 1 to 10, wherein one of said first anchor (30) and said second anchor (90) also functions as a brake shoe clearance adjustment device for adjusting clearances between a brake drum and each brake shoe (40).

12. The drum brake device as claimed in claim 11, wherein said shoe clearance adjustment device (30;90) has an automatic shoe clearance adjustment mechanism adapted to sense an amount of brake shoe movement and automatically adjust clearances between said brake drum and said each brake shoe (40).
